# EUROPEAN PATENT APPLICATION

(11) **EP 4 813 822 A1**
(43) Date of publication of application: **30.09.2026**
(21) Application number: 25177862.7
(22) Date of filing: 21.05.2025
(51) Int. Cl.: B62K 5/08, B62K 21/08, B62K 21/10, B62K 5/003, B62K 5/00

(54) **STEERING DAMPING DEVICE FOR SCOOTERS, AND SCOOTER**

(30) Priority: 26.03.2025 CN 202520549791 U
(71) Applicant: Intradin (Shanghai) Machinery Co., Ltd., Shanghai 201109 (CN)
(72) Inventor: LI, Ping, Shanghai (CN); QIAO, Xuetao, Shanghai (CN)
(74) Representative: Vitina, Maruta

(57) **Abstract**

A steering damping device for scooters, including a frame (8), a steering shaft (1), a front wheel assembly (2), a steering plate (3) and an elastic piece (4). The steering shaft (1) is pivotally connected to the frame (8). The front wheel assembly (2) is connected to the frame (8). A first end of the steering plate (3) is fixedly connected to a bottom end of the steering shaft (1), and a second end of the steering plate (3) is hingedly connected to the front wheel assembly (2). The elastic piece (4) includes a mounting structure (41), a first arc-shaped section (42) and a second arc-shaped section (43). The mounting structure (41) is connected to the frame (8). The first arc-shaped section (42), the second arc-shaped section (43) and the steering plate (3) are together configured to enclose a buffer space (44). A scooter including such steering damping device is also provided.

## Description

### TECHNICAL FIELD

This application relates to scooters, and more particularly to a steering damping device for scooters, and a scooter including the same.

### BACKGROUND

Most of the existing commercially-available electric scooters are not equipped with a steering damper, and thus generally suffer from an excessive steering flexibility. As a consequence, it is difficult to stably control the scooter's direction during the acceleration and braking process, easily causing the occurrence of sudden deviation. In view of this, there are serious safety risks when traveling on a smooth surface (such as wet surface or tile surface).

### SUMMARY

In view of this, an object of the disclosure is to provide a steering damping device for scooters to overcome the defects in the prior art.

Technical solutions of the present disclosure are described as follows.

In a first aspect, this application provides a steering damping device for scooters, comprising:
a frame;
a steering shaft;
a front wheel assembly;
a steering plate; and
an elastic piece;
wherein the steering shaft is pivotally connected to the frame;
the front wheel assembly is connected to the frame;
a first end of the steering plate is fixedly connected to a bottom end of the steering shaft, and a second end of the steering plate is hingedly connected to the front wheel assembly;
the elastic piece comprises a mounting structure, a first arc-shaped section and a second arc-shaped section;
the mounting structure is connected to the frame;
the first arc-shaped section is configured to extend obliquely upward from a first end of the mounting structure toward the second arc-shaped section, and is connected to the second arc-shaped section;
the second arc-shaped section is configured to extend obliquely downward from an end of the first arc-shaped section toward a second end of the mounting structure, and is connected to the mounting structure;
the first arc-shaped section is configured to abut against a third end of the steering plate;
the second arc-shaped section is configured to abut against a fourth end of the steering plate; and
the first arc-shaped section, the second arc-shaped section and the steering plate are together configured to enclose a buffer space.

In some embodiments, the first arc-shaped section and the second arc-shaped section together form a U-shaped structure; and
the first arc-shaped section and the second arc-shaped section are each configured to be inclined downward from an inner side edge toward an outer side edge.

In some embodiments, the mounting structure comprises a first mounting portion and a second mounting portion;
a first end of the first mounting portion is connected to the frame, and a second end of the first mounting portion is connected to the first arc-shaped section; and
a first end of the second mounting portion is connected to the frame, and a second end of the second mounting portion is connected to the second arc-shaped section.

In some embodiments, the first mounting portion hasa first mounting end and a first connecting end;
the first mounting end is connected to the frame;
the first connecting end is provided between the first mounting end and the first arc-shaped section;
the second mounting portion has a second mounting end and a second connecting end;
the second mounting end is connected to the frame; and
the second connecting end is provided between the second mounting end and the second arc-shaped section.

In some embodiments, the first mounting end is configured to extend downward, and is connected to the first connecting end; and the first mounting end is substantially perpendicular to the first arc-shaped section.

In some embodiments, the steering plate comprises a first base plate and a second base plate;
the second base plate is configured to be inclined downward with respect to the first base plate;
a protruding portion is provided between the first base plate and the second base plate;
the first arc-shaped section is configured to abut against a first end of the protruding portion;
the second arc-shaped section is configured to abut against a second end of the protruding portion; and
the first arc-shaped section, the second arc-shaped section and the protruding portion are together configured to enclose the buffer space.

In some embodiments, the front wheel assembly comprises a first front wheel sub-assembly and a second front wheel sub-assembly;
the first front wheel sub-assembly and the second front wheel sub-assembly are respectively provided on two sides of the steering shaft;
each of the first front wheel sub-assembly and the second front wheel sub-assembly comprises a wheel and a supporting rod; and
a first end of the supporting rod is connected to the wheel, and a second end of the supporting rod is connected to the frame.

In some embodiments, the steering damping device further comprises a connecting rod assembly;
wherein the connecting rod assembly comprises a first connecting rod and a second connecting rod;
a first end of the first connecting rod is hingedly connected to the second end of the steering plate, and a second end of the first connecting rod is hingedly connected to the first front wheel sub-assembly; and
a first end of the second connecting rod is hingedly connected to the second end of the steering plate, and a second end of the second connecting rod is hingedly connected to the second front wheel sub-assembly.

In some embodiments, the steering damping device further comprises a first steering knuckle and a second steering knuckle;
a first end of the first steering knuckle is hingedly connected to the first connecting rod, and a second end of the first steering knuckle is hingedly connected to the first front wheel sub-assembly; and
a first end of the second steering knuckle is hingedly connected to the second connecting rod, and a second end of the second steering knuckle is hingedly connected to the second front wheel sub-assembly.

In a second aspect, this application provides a scooter, comprising: the steering damping device provided herein.

Compared to the prior art, the present disclosure has the following beneficial effects.

Regarding the steering damping device provided herein, by means of the elastic piece, the first arc-shaped section is configured to extend obliquely upward from the first end of the mounting structure toward the second arc-shaped section, and is connected to the second arc-shaped section. The second arc-shaped section is configured to extend obliquely downward from the end of the first arc-shaped section toward the second end of the mounting structure, and is connected to the mounting structure. During steering, the first arc-shaped section or the second arc-shaped section comes into frictional contact with the steering plate. By increasing the frictional force between the elastic piece and the steering plate, a damping effect is achieved during steering, which helps reduce the flexibility of the steering shaft and improves the stability of directional control, thereby addressing the safety hazard caused by excessive steering sensitivity.

### BRIEF DESCRIPTION OF THE DRAWINGS

In order to illustrate the technical solutions in the embodiments of the present disclosure or the prior art more clearly, the accompanying drawings needed in the description of the embodiments or prior art will be briefly described below. Obviously, presented in the accompanying drawings are only some embodiments of the present disclosure, and for those of ordinary skill in the art, other accompanying drawings can be obtained from the structures illustrated therein without making creative effort.
Fig. 1 is a structural diagram of a steering damping device according to an embodiment of the present disclosure;
Fig. 2 is a structural diagram showing assembly of a steering shaft, a steering plate and an elastic piece according to an embodiment of the present disclosure;
Fig. 3 is a structural diagram of the steering plate according to an embodiment of the present disclosure;
Fig. 4 is a structural diagram of the elastic piece according to an embodiment of the present disclosure;
Fig. 5 is a structural diagram of a scooter with the steering damping device according to an embodiment of the present disclosure;
Fig. 6 is a bottom view of the scooter according to an embodiment of the present disclosure; and
Fig. 7 is an enlarged view of portion "A" in Fig. 6.

In the figures: 1-steering shaft; 2-front wheel assembly; 21-first front wheel sub-assembly; 22-second front wheel sub-assembly; 23-wheel; 24-supporting rod; 3-steering plate; 31-protruding portion; 32-first base plate; 33-second base plate; 4-elastic piece; 41-mounting structure; 411-first mounting portion; 412-second mounting portion; 413-first mounting end; 414-first connecting end; 415-second mounting end; 416-second connecting end; 42-first arc-shaped section; 43-second arc-shaped section; 44-buffer space; 45-inner side edge; 46-outer side edge; 5-connecting rod assembly; 51-first connecting rod; 52-second connecting rod; 6-first steering knuckle; 7-second steering knuckle; and 8- frame.

The implementation, functional characteristics and advantages of the present disclosure will be further described in conjunction with the embodiments and accompanying drawings.

### DETAILED DESCRIPTION OF EMBODIMENTS

The technical solutions in the embodiments of the present disclosure will be described clearly and completely below in conjunction with the accompanying drawings. It is obvious that the described embodiments are merely some embodiments of the present disclosure, instead of all embodiments. Based on the embodiments in the present disclosure, all other embodiments obtained by those of ordinary skill in the art without making creative effort shall fall within the scope of the present disclosure.

It should be noted that all directional indications (such as up, down, left, right, front, and back) are used only for explaining the relative positional relationship or movement between the components in a particular attitude (as shown in the accompanying drawings), and the directional indications are correspondingly changed if the particular attitude is changed.

As used herein, terms such as "first" and "second" are only descriptive, and should not be construed as indicating or implying their relative importance or implicitly specifying the number of technical features indicated. As a result, a feature defined as "first" or "second" may include at least one of such feature, either explicitly or implicitly. In addition, "and/or" includes three solutions, for example, "A and/or B" includes technical solution A, technical solution B, and a combination thereof. In addition, the technical solutions of various embodiments may be combined with each other on the premise that the combined solution can be implemented by those of ordinary skill in the art. When the combination of technical solutions appears to be contradictory or unimplementable, it should be understood that such a combination does not exist and is not included within the scope of the present disclosure.

As used herein, the terms "about," "substantially," or "approximately" are intended to encompass not only the explicitly stated value but also values within an acceptable range of deviation from that value, where such deviation is determined by one of ordinary skill in the art in view of the specific measurement being made and the associated measurement error (i.e., the limitations of the measurement system).

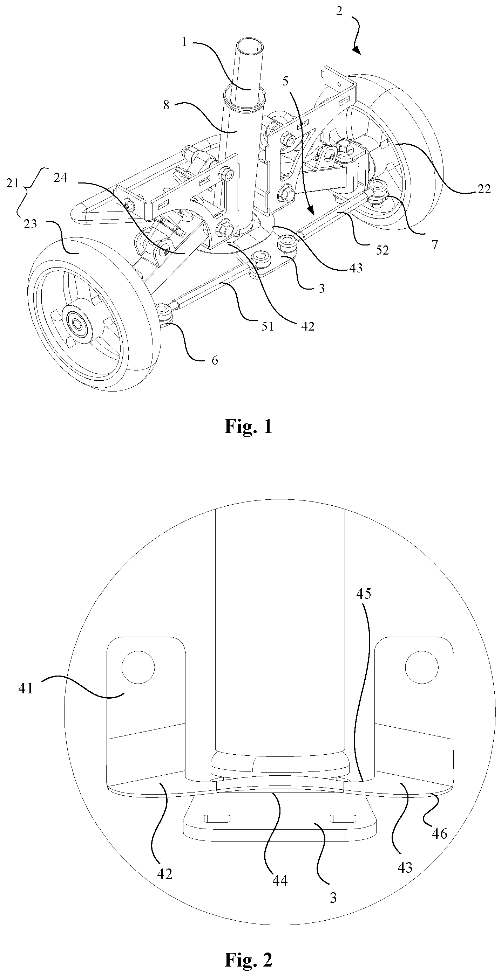

As shown in Figs. 1-4, an embodiment of the present disclosure provides a steering damping device for scooters, including a including a frame 8, a steering shaft 1, a front wheel assembly 2, a steering plate 3 and an elastic piece 4. The steering shaft 1 is pivotally connected to the frame 8. The front wheel assembly 2 is connected to the frame 8. A first end of the steering plate 3 is fixedly connected to a bottom end of the steering shaft 1, and a second end of the steering plate 3 is hingedly connected to the front wheel assembly 2. The steering plate 3 includes a protruding portion 31. The elastic piece 4 includes a mounting structure 41, a first arc-shaped section 42 and a second arc-shaped section 43. The mounting structure 41 is connected to the frame 8. The first arc-shaped section 42 is configured to extend obliquely upward from a first end of the mounting structure 41 toward the second arc-shaped section 43, and is connected to the second arc-shaped section 43. The second arc-shaped section 43 is configured to extend obliquely downward from an end of the first arc-shaped section 42 toward a second end of the mounting structure 41, and is connected to the mounting structure 41. The first arc-shaped section 42 is configured to abut against a first end of the protruding portion 31. The second arc-shaped section 43 is configured to abut against a second end of the protruding portion 31. The first arc-shaped section 42, the second arc-shaped section 43 and the protruding portion 31 are together configured to enclose a buffer space 44.

When the steering damping device is in its initial state, a central portion of the first arc-shaped section 42 abuts against the first end of the protruding portion 31, and a central portion of the second arc-shaped section 43 abuts against the second end of the protruding portion 31. When the steering shaft 1 drives the steering plate 3 to rotate toward the first arc-shaped section 42, the protruding portion 31 moves toward the second arc-shaped section 43. Since the first arc-shaped section 42 extends obliquely upward, a portion of the protruding portion 31 that abuts against the first arc-shaped section 42 moves into the buffer space 44, i.e., the protruding portion 31 disengages from the first arc-shaped section 42. Meanwhile, a portion of the protruding portion 31 abutting against the second arc-shaped section 43 continues to move along the second arc-shaped section 43. As the second arc-shaped section 43 extends obliquely downward from the end of the first arc-shaped section 42 toward the second end of the mounting structure 41, the second arc-shaped section 43 continuously rubs against the protruding portion 31. As a result, a damping effect is achieved during the turning of a scooter toward the first arc-shaped section 42. The frictional force increases as the degree of steering increases. The greater the distance that the protruding portion 31 travels along the second arc-shaped section 43, the greater the damping force applied to the steering plate 3. Conversely, when the steering shaft 1 drives the steering plate 3 to rotate toward the second arc-shaped section 43, the protruding portion 31 moves toward the first arc-shaped section 42. The portion of the protruding portion 31 that abuts against the second arc-shaped section 43 moves into the buffer space 44, thereby causing the protruding portion 31 to disengage from the second arc-shaped section 43. At the same time, the portion of the protruding portion 31 that abuts against the first arc-shaped section 42 continues to move along the first arc-shaped section 42. The first arc-shaped section 42 continues to rub against the protruding portion 31, and the frictional force increases with the degree of steering. Therefore, when the scooter turns toward the second arc-shaped section 43, a damping effect is also produced. The greater the distance that the protruding portion 31 moves along the first arc-shaped section 42, the greater the damping force applied to the steering plate 3.

Regarding the steering damping device provided herein, by means of the elastic piece 4, the first arc-shaped section 42 is configured to extend obliquely upward from the first end of the mounting structure 41 toward the second arc-shaped section 43, and is connected to the second arc-shaped section 43. The second arc-shaped section 43 is configured to extend obliquely downward from the end of the first arc-shaped section 42 toward the second end of the mounting structure 41, and is connected to the mounting structure 41. During steering, the first arc-shaped section 42 or the second arc-shaped section 43 comes into frictional contact with the steering plate 3. By increasing the frictional force between the elastic piece 4 and the steering plate 3, a damping effect is achieved during steering, which helps reduce the flexibility of the steering shaft 1 and improves the stability of directional control, thereby addressing the safety hazard caused by excessive steering sensitivity.

As shown in Figs. 1-4, the mounting structure 41 includes a first mounting portion 411 and a second mounting portion 412. The first mounting portion 411 has a first mounting end 413 and a first connecting end 414. The first mounting end 413 is connected to the frame 8. The first mounting end 413 is configured to extend downward, and is smoothly connected to a first end of the first connecting end 414. A second end of the first connecting end 414 is smoothly connected to the first arc-shaped section 42. The first mounting end 413 is substantially perpendicular to the first arc-shaped section 42. The first arc-shaped section 42 is configured to extend obliquely upward from the second end of the first connecting end 414 toward the second arc-shaped section 43, and is connected to the second arc-shaped section 43.

The second mounting portion 412 has a second mounting end 415 and a second connecting end 416. The second mounting end 415 is connected to the frame 8. The second mounting end 415 is configured to extend downward, and is smoothly connected to a first end of the second connecting end 416. A second end of the second connecting end 416 is smoothly connected to the second arc-shaped section 43. The second mounting end 415 is substantially perpendicular to the second arc-shaped section 43. The second arc-shaped section 43 is configured to extend obliquely downward from the end of the first arc-shaped section 42 toward the second connecting end 416, and is connected to the second mounting end 415.

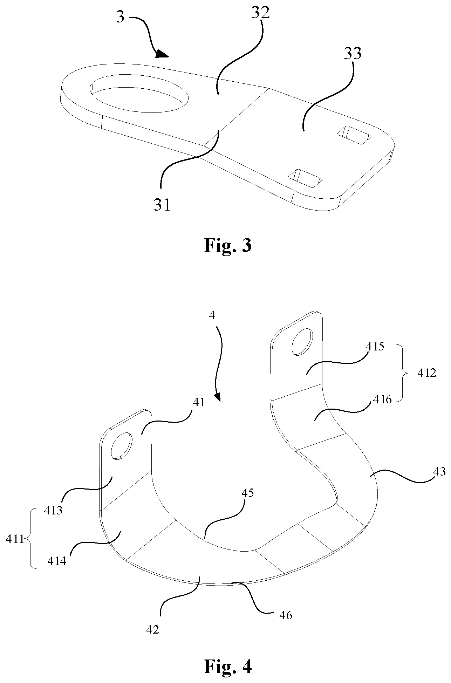

Specifically, the first mounting portion 411 and the second mounting portion 412 have the same structure and dimensions, and are symmetrically arranged. The first arc-shaped section 42 and the second arc-shaped section 43 also have the same structure and dimensions, and are symmetrical with respect to each other. As shown in Fig. 4, the first arc-shaped section 42 and the second arc-shaped section 43 together form a U-shape structure. As shown in Fig. 2, the first arc-shaped section 42 and the second arc-shaped section 43 are each configured to be inclined downward from an inner side edge 45 to an outer side edge 46.

As shown in Figs. 1 and 3, the steering plate 3 includes a first base plate 32 and a second base plate 33. The first base plate 32 is configured to be inclined downward. The second base plate 33 is configured to be inclined downward from an end of the first base plate 32. A protruding portion 31 is provided at a bent junction between the first base plate 32 and the second base plate 33, such that a middle portion of the steering plate 3 protrudes with respect to its two ends. The localized arrangement of the protruding portion 31 enables concentration of frictional force during steering, effectively mitigating slippage risks and demonstrating improved performance on wet or low-traction surfaces and during sharp turns.

The front wheel assembly 2 includes a first front wheel sub-assembly 21 and a second front wheel sub-assembly 22. The first front wheel sub-assembly 21 and the second front wheel sub-assembly 22 are respectively provided on two sides of the steering shaft 1. The first front wheel sub-assembly 21 includes a first wheel 23 and a first supporting rod 24. The second front wheel sub-assembly 22 includes a second wheel 23 and a second supporting rod 24. A first end of the supporting rod 24 is connected to the wheel 23, and a second end of the supporting rod 24 is connected to the frame 8.

Specifically, both the first mounting end 413 and the second mounting end 415 are fixedly connected to the frame 8 with screws.

As shown in Figs. 1-4, the steering damping device further includes a connecting rod assembly 5. The connecting rod assembly 5 includes a first connecting rod 51 and a second connecting rod 52. The steering damping device further includes a first steering knuckle 6 and a second steering knuckle 7. A first end of the first connecting rod 51 is hingedly connected to the second end of the steering plate 3, and a second end of the first connecting rod 51 is hingedly connected to a first end of the first steering knuckle 6. A second end of the first steering knuckle 6 is hingedly connected to the first wheel 23 of the first front wheel sub-assembly 21. A first end of the second connecting rod 52 is hingedly connected to the second end of the steering plate 3, and a second end of the second connecting rod 52 is hingedly connected to a first end of the second steering knuckle 7. A second end of the second steering knuckle 7 is hingedly connected to the second wheel 23 of the second front wheel sub-assembly 22.

During steering, the steering shaft 1 is driven to rotate, so as to drive the steering plate 3 to rotate. The steering plate 3, in turn, drives the first connecting rod 51 and the second connecting rod 52 to move. Specifically, the first connecting rod 51 drives the first wheel 23 of the first front wheel sub-assembly 21 to rotate about the first steering knuckle 6, while the second connecting rod 52 drives the second wheel 23 of the second front wheel sub-assembly 22 to rotate about the second steering knuckle 7.

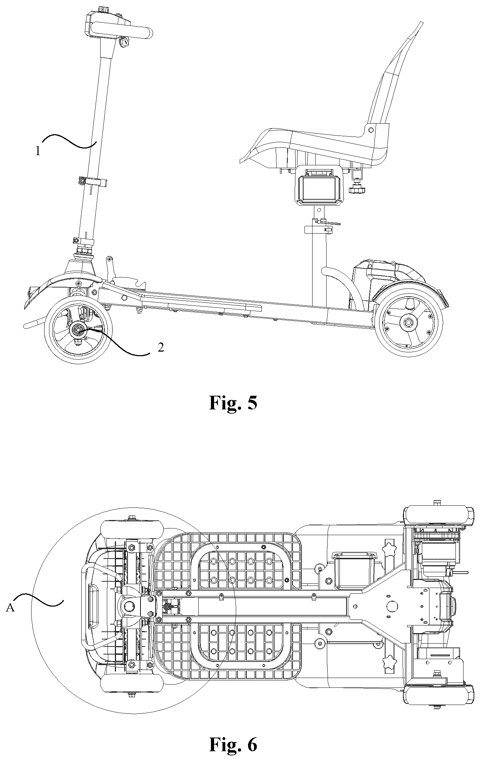

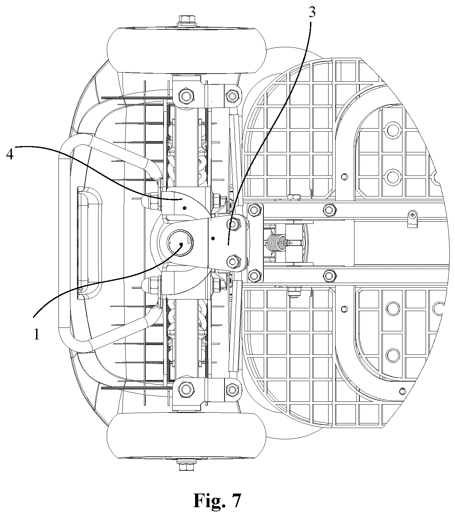

As shown in Figs. 5-7, the present disclosure further provides a scooter, which includes the steering damping device as described above.

Described above are merely preferred embodiments of the present disclosure, and are not intended to limit the scope of the present disclosure. It should be understood that various modifications, changes and replacements made by those skilled in the art without departing from the spirit of the disclosure shall fall within the scope of the present disclosure defined by the appended claims

## Claims

1. A steering damping device for scooters, comprising:
a frame;
a steering shaft;
a front wheel assembly;
a steering plate; and
an elastic piece;
**characterized in that** the steering shaft is pivotally connected to the frame;
the front wheel assembly is connected to the frame;
a first end of the steering plate is fixedly connected to a bottom end of the steering shaft, and a second end of the steering plate is hingedly connected to the front wheel assembly;
the elastic piece comprises a mounting structure, a first arc-shaped section and a second arc-shaped section;
the mounting structure is connected to the frame;
the first arc-shaped section is configured to extend obliquely upward from a first end of the mounting structure toward the second arc-shaped section, and is connected to the second arc-shaped section;
the second arc-shaped section is configured to extend obliquely downward from an end of the first arc-shaped section toward a second end of the mounting structure, and is connected to the mounting structure;
the first arc-shaped section is configured to abut against a third end of the steering plate;
the second arc-shaped section is configured to abut against a fourth end of the steering plate; and
the first arc-shaped section, the second arc-shaped section and the steering plate are together configured to enclose a buffer space.

2. The steering damping device according to claim 1, **characterized in that** the first arc-shaped section and the second arc-shaped section together form a U-shaped structure; and
the first arc-shaped section and the second arc-shaped section are each configured to be inclined downward from an inner side edge toward an outer side edge.

3. The steering damping device according to claim 1, **characterized in that** the mounting structure comprises a first mounting portion and a second mounting portion;
a first end of the first mounting portion is connected to the frame, and a second end of the first mounting portion is connected to the first arc-shaped section; and
a first end of the second mounting portion is connected to the frame, and a second end of the second mounting portion is connected to the second arc-shaped section.

4. The steering damping device according to claim 3, **characterized in that** the first mounting portion has a first mounting end and a first connecting end;
the first mounting end is connected to the frame;
the first connecting end is provided between the first mounting end and the first arc-shaped section;
the second mounting portion has a second mounting end and a second connecting end;
the second mounting end is connected to the frame; and
the second connecting end is provided between the second mounting end and the second arc-shaped section.

5. The steering damping device according to claim 4, **characterized in that** the first mounting end is configured to extend downward, and is connected to the first connecting end; and the first mounting end is substantially perpendicular to the first arc-shaped section.

6. The steering damping device according to claim 1, **characterized in that** the steering plate comprises a first base plate and a second base plate;
the second base plate is configured to be inclined downward with respect to the first base plate;
a protruding portion is provided between the first base plate and the second base plate;
the first arc-shaped section is configured to abut against a first end of the protruding portion;
the second arc-shaped section is configured to abut against a second end of the protruding portion; and
the first arc-shaped section, the second arc-shaped section and the protruding portion are together configured to enclose the buffer space.

7. The steering damping device according to claim 1, **characterized in that** the front wheel assembly comprises a first front wheel sub-assembly and a second front wheel sub-assembly;
the first front wheel sub-assembly and the second front wheel sub-assembly are respectively provided on two sides of the steering shaft;
each of the first front wheel sub-assembly and the second front wheel sub-assembly comprises a wheel and a supporting rod; and
a first end of the supporting rod is connected to the wheel, and a second end of the supporting rod is connected to the frame.

8. The steering damping device according to claim 7, further comprising:
a connecting rod assembly;
wherein the connecting rod assembly comprises a first connecting rod and a second connecting rod;
a first end of the first connecting rod is hingedly connected to the second end of the steering plate, and a second end of the first connecting rod is hingedly connected to the first front wheel sub-assembly; and
a first end of the second connecting rod is hingedly connected to the second end of the steering plate, and a second end of the second connecting rod is hingedly connected to the second front wheel sub-assembly.

9. The steering damping device according to claim 8, further comprising;
a first steering knuckle; and
a second steering knuckle;
wherein a first end of the first steering knuckle is hingedly connected to the first connecting rod, and a second end of the first steering knuckle is hingedly connected to the first front wheel sub-assembly; and
a first end of the second steering knuckle is hingedly connected to the second connecting rod, and a second end of the second steering knuckle is hingedly connected to the second front wheel sub-assembly.

10. A scooter, comprising:
the steering damping device according to any one of claims 1-9.
